# EUROPÄISCHE PATENTSCHRIFT

(11) **EP 2 750 943 B1**
(45) Veröffentlichungstag und Bekanntmachung des Hinweises auf die Patenterteilung: **28.03.2018**
(21) Anmeldenummer: 12741256.7
(22) Anmeldetag: 27.07.2012
(51) Int. Cl.: B60T 7/22

(54) **VERFAHREN FÜR EIN FAHRZEUG-SICHERHEITSSYSTEM UND ENTSPRECHENDE VORRICHTUNG**
METHOD FOR A VEHICLE SAFETY SYSTEM AND CORRESPONDING DEVICE
PROCÉDÉ DESTINÉ À UN SYSTÈME DE SÉCURITÉ D'UN VÉHICULE ET DISPOSITIF CORRESPONDANT

(30) Priorität: 03.09.2011 DE 102011112422
(43) Veröffentlichungstag der Anmeldung: 09.07.2014
(73) Patentinhaber: Volkswagen Aktiengesellschaft, 38440 Wolfsburg (DE)
(72) Erfinder: HAUCK, Stefan, 31275 Lehrte (DE); KOLMS, Thomas, 38553 Wasbüttel (DE); RIEDEL, Stephan, 38448 Braunschweig (DE); KOPISCHKE, Stephan, 38442 Wolfsburg (DE); BUSCH, Sebastian, 38118 Braunschweig (DE)
(86) Internationale Anmeldenummer: PCT/EP2012/003208
(87) Internationale Veröffentlichungsnummer: WO 2013/029731

(56) Entgegenhaltungen:
- EP-A1- 1 736 797
- WO-A2-03/007271
- GB-A- 2 350 700
- US-A- 5 714 928

## Beschreibung

Die vorliegende Erfindung betrifft ein Verfahren zur Vermeidung kritischer Fahrzeugsituationen und zur Unterdrückung unnötiger automatischer Bremseingriffe bei Fahrzeugen mit Kollisionswarn- und/oder automatischem Notbremssystem, sowie eine entsprechende Vorrichtung hierfür.

Derzeit finden Kollisionswarn- und Notbremssysteme in der automobilen Welt immer weitere Verbreitung. Diese Systeme nutzen unterschiedliche Umfeldsensoren (z.B. Radar, Laser, Kamera) um vorausfahrende Verkehrsteilnehmer (Autos, LKW, Radfahrer, Fußgänger usw.) zu erkennen. In einer ersten Eskalationsstufe wird der Fahrer vor einer drohenden Kollision gewarnt. Beispielsweise kann diese Warnung über einen kurzen Bremsruck erfolgen. Bei einer bestimmten Kollisionswahrscheinlichkeit wird davon ausgegangen, dass der Fahrer den Unfall selbst nicht vermeiden kann. In einem solchen Fall wird eine automatische Verzögerung des Fahrzeugs ausgelöst. Diese Verzögerung dient der Reduktion der Kollisionsgeschwindigkeit und einer damit verbundenen Schwere eines Unfalls; in Ausnahmefällen kann die Kollision auch gänzlich vermieden werden.

Speziell stehende Objekte werden bei solchen automatisierten Kollisionswarn- und Notbremssystemen von der Erkennung oftmals bewusst ausgenommen, da stehende Objekte deutlich schwieriger als gefährlich bzw. ungefährlich detektiert werden können, als bewegte Objekte. Daher bestehen hier erhöhte Anforderungen an die Sensorik, da beispielsweise Radar-Sensoren sehr gut metallische und wasserhaltige Objekte erkennen können - aber nicht die Höhe eines solchen Objekts. Bei bewegten Objekten kann es sich dagegen fast immer nur um Verkehrsteilnehmer handeln. Ein stehendes Objekt kann beispielsweise auch ein aus der Straße ragender Gully-Deckel, ein großer Schneehaufen oder eine auf der Straße liegende Pappschachtel sein. In solchen Situationen kann es leicht zu einer Fehlauslösung eines automatisierten Kollisionswarn- und Notbremssystems kommen.

Andererseits wird durch das Ausnehmen von stehenden Objekten aus der Erkennung der Nutzen von automatisierten Kollisionswarn- und Notbremssystemen stark reduziert. Daher besteht derzeit ein Trend, Warnungen und Notbremsungen auch auf stehende Objekte durchzuführen. Hierfür existieren sogenannte "Überfahrbarkeitsklassifikatoren", die erkennen sollen, ob ein stehendes (z.B. metallisches) Objekt eine Gefahr für das eigene Fahrzeug darstellt, oder ob man ohne Schwierigkeiten über das Objekt fahren kann. Diese Klassifikatoren haben allerdings eine Schwäche bei starken Änderungen der Steigung der Straße. Ein solcher "Knick" in der Straße kann für den Sensor des automatisierten Kollisionswarn- und Notbremssystems als ein Objekt erscheinen, welches nicht überfahrbar ist. In einem solchen Fall drohen unerwünschte Bremseingriffe.

Aus der WO 03/007271 A2 ist ein Notbremssystem bekannt, bei dem ein Schwellenwert für die Auslösung des Bremsvorgangs von dem Fahrbahnverlauf abhängig ist. Dabei ist vorgesehen, den Schwellenwert für die Auslösung bei einem Gefälle herabzusetzen, um den verlängerten Bremsweg an dem Gefälle zu kompensieren.

Daneben offenbart die GB 2 350 700 A ein Sicherheitssystem für ein Fahrzeug, bei dem die Geschwindigkeit angepasst wird. Die Regelung wird nur im Falle einer Bergabfahrt aktiviert, um gefährliche Fahrsituationen zu vermeiden.

Zudem zeigt die US 5 714 928 ein Sicherheitssystem, mit dem Kollisionen vermieden werden sollen. Die Sensorik für das System wird entsprechend des Fahrbahnsteigung eingepasst, um ein optimales Detektieren der Umgebung zu ermöglichen.

Unerwünschte Bremseingriffe eines Sicherheitssystems sind insbesondere dann besonders kritisch, wenn sich das Fahrzeug auf einer Bergabfahrt auf rutschigem Untergrund befindet. Dabei können solche Bremseingriffe zu Instabilitäten des Fahrzeugs führen. Speziell bei solchen Bergabfahrten wirkt auf das Fahrzeug alleine durch das Gefälle eine Kraft in Fahrrichtung auch wenn kein Antriebsmoment vom Motor bereitgestellt wird. Die Räder des Fahrzeugs liefern aber nur so lange ausreichenden Seitenhalt, solange sie sich bei bewegtem Fahrzeug auch entsprechend drehen. Daher müssen Bremseingriffe in solchen Situationen stets so erfolgen, dass die Räder nicht blockieren, um ein Rutschen oder Ausbrechen des Fahrzeugs bei der Bergabfahrt sicher zu verhindern.

Ein automatisiertes Kollisionswarn- und Notbremssystem, welches prinzipiell nicht auf stehende Objekte reagiert, hat zwar den Vorteil, dass solche unerwünschten automatischen Bremseingriffe bei Bergabfahrten kaum ausgelöst werden. Allerdings hat ein solches automatisiertes Kollisionswarn- und Notbremssystem eben auch nur einen begrenzten Nutzen, da es auf gefährliche stehende Hindernisse nicht reagiert. Auch ein manuelles Abschalten eines automatisierten Kollisionswarn- und Notbremssystems bei entsprechenden Bergabfahrten erscheint nicht sehr sinnvoll, da das Deaktivieren oder das wieder Aktivieren dieses Systems vom Fahrer leicht übersehen werden kann.

Aus diesem Grund ist es wünschenswert, dass ein automatisiertes Kollisionswarn- und Notbremssystemen in normaler Straßenumgebung möglichst viele potentiell für eine Kollision gefährliche Objekte erkennt, andererseits aber bei Bergabfahrten keine Warnungen abgibt oder Notbremsungen einleitet. Da andererseits der Fahrer eines Fahrzeugs bei solchen Bergabfahrten sehr langsam und aufmerksam fahren muss, ist in solchen Fällen die Gefahr einer Kollision ohnehin sehr gering.

Daher stellt sich die vorliegende Erfindung die Aufgabe, im Falle von Bergabfahrten denkbare Bremseingriffe für Warnungen oder Notbremsungen zu unterdrücken.

Erfindungsgemäß wird diese Aufgabe durch ein Verfahren für ein Fahrzeug-Sicherheitssystem zur Vermeidung kritischer Fahrzeugsituationen und zur Unterdrückung unnötiger automatischer Bremseingriffe nach Anspruch 1, durch eine entsprechende Vorrichtung nach Anspruch 10 und durch ein Fahrzeug nach Anspruch 12 gelöst. Die abhängigen Ansprüche definieren bevorzugte und vorteilhafte Ausführungsformen der vorliegenden Erfindung.

Im Rahmen der vorliegenden Erfindung wird ein Verfahren für ein Fahrzeug-Sicherheitssystem in einem Fahrzeug zur Unterdrückung unnötiger Bremseingriffe eines automatischen Bremssystems bereitgestellt. Das automatische Bremssystem dient dabei als Kollisionswarn- und Notbremssystem dazu, mögliche Hindernisse auf der Fahrbahn des Fahrzeugs zu erkennen und den Fahrer bei drohenden Kollisionen zu warnen, bzw. eine automatische Bremsung des Fahrzeugs einzuleiten. Das erfindungsgemäße Fahrzeug-Sicherheitssystem verhindert dabei unnötige Bremseingriffe, welche vom automatischen Bremssystem fälschlicherweise bei Bergfahrten ausgelöst werden können, indem es solche automatischen Bremseingriffe bei Bergabfahrten unterdrückt. Hierzu erkennt das erfindungsgemäße Fahrzeug-Sicherheitssystem eine Bergfahrt des Fahrzeugs über die Auswertung von Signalen, welche von einer Anlage des Fahrzeugs empfangen werden. Unter Bergfahrten werden dabei Bergabfahrten verstanden.

Eine solche Anlage kann beispielsweise eine spezielle Steuereinheit für den Offroad-Modus des Fahrzeugs sein. In diesem Fall wird von dieser Steuereinheit bei Aktivierung des Offroad-Modus ein entsprechendes Signal an das Fahrzeug-Sicherheitssystem geleitet, so dass während der Offroad-Modus aktiv ist, automatische Bremseingriffe des automatischen Bremssystems unterdrückt werden können.

Weiterhin kann eine solche Anlage auch ein Bergabfahr-Assistenz-System wie z.B. Hill Descent Control, HDC, sein. Solche Bergabfahr-Assistenz-Systeme unterstützen den Fahrer speziell bei Bergabfahrten und stellen eine stabile Fahrzeuglage auf schwierigem Untergrund sicher. Über die Aktivierung eines solchen Bergabfahr-Assistenz-Systems kann dabei ebenso ein entsprechendes Signal an das erfindungsgemäße Fahrzeug-Sicherheitssystem geleitet werden, um automatische Bremseingriffe des automatischen Bremssystems bei Bergabfahrten zu unterdrücken.

Auch im Fahrzeug verbaute Sensoren zur Erfassung der Fahrzeuglage oder zur Erfassung von Beschleunigungen können die entsprechenden Signale liefern, so dass das Fahrzeug-Sicherheitssystem Bergfahrt daraus erkennen kann und eine Unterdrückung der automatischen Bremseingriffe veranlassen kann. Beispielsweise kann über einen Neigungssensor im Fahrzeug die Lage der Fahrzeuglängsachse gegenüber der Horizontalen gemessen und so die momentane Steigung bzw. das Gefälle des Untergrundes bestimmt werden.

Außerdem kann über entsprechende Sensoren im Fahrzeug auch die Bodenbeschaffenheit des Untergrundes bestimmt werden. Beispielsweise können Signale von Sensoren der Fahrzeugdämpfer vom Fahrzeug-Sicherheitssystem ausgewertet werden, so dass auch hier unebenes Gelände bzw. Bergfahrten erkannt werden und eine Unterdrückung automatischer Bremseingriffe des automatischen Bremssystems veranlasst werden kann.

Dabei kann sowohl eine Fahrt des Fahrzeugs auf sehr unebenem Gelände als auch eine Bergabfahrt als Bergfahrt betrachtet werden.

Das automatische Bremssystem kann dabei durch entsprechende Umfeldsensoren vorausfahrende Verkehrsteilnehmer, aber auch mögliche Hindernisse im Fahrbereich des Fahrzeugs erkennen und bestimmen, ob eine Kollision mit einem Verkehrsteilnehmer oder einem Hindernis droht. Insbesondere kann ein solches automatisches Bremssystem auch so ausgelegt sein, dass es auch stehende Objekte als potentielle Gefahr für eine Kollision erkennen kann. Im Falle einer vom automatischen Bremssystem detektierten Kollisionswahrscheinlichkeit kann das automatische Bremssystem zunächst den Fahrer vor einer drohenden Kollision warnen. Dies kann beispielsweise über einen kurzen Bremsruck geschehen, der über eine Aktivierung der Bremsanlage des Fahrzeugs durch das automatische Bremssystem erfolgt. Gleichzeitig kann über das automatische Bremssystem die Bremsanlage des Fahrzeugs entsprechend konditioniert und in einen besonders bremsbereiten Zustand gebraucht werden. Dabei können einerseits Leerwege der Bremsanlage beseitigt werden, so dass beispielsweise die Bremsbeläge bereits leicht auf den Bremsscheiben aufliegen; andererseits kann auch die Bremsanlage entsprechend vorbefüllt werden. Durch diese Maßnahmen wird erreicht, dass bei einer nachfolgenden Aktivierung der Bremsanlage nur noch eine minimale Verzögerungszeit bis zum Einsetzen der Bremswirkung auftritt. In einer weiteren Eskalationsstufe wird vom automatischen Bremssystem eine Verzögerung des Fahrzeugs ebenfalls durch eine Aktivierung der Bremsanlage des Fahrzeugs ausgelöst. Allerdings kann das automatische Bremssystem insbesondere bei Bergabfahrten oder in sehr unebenem Gelände auch leicht Fehlauslösungen verursachen, da hier z.B. Straßenunebenheiten oder starke Steigungswechsel der Fahrbahn fälschlicherweise als stehende Hindernisse erkannt werden können. In diesem Fall würde eine Warnung des automatischen Bremssystems durch eine kurzen Bremsruck oder eine automatische Bremsung des Fahrzeugs nicht nur stören, sondern möglicherweise die Fahrzeugstabilität gefährden. Die erfindungsgemäße Unterdrückung solcher Bremseingriffe des automatischen Bremssystems vermindert diese Gefahr.

Die Unterdrückung der unnötigen Bremseingriffe des automatischen Bremssystems durch das erfindungsgemäße Verfahren wird insbesondere so ausgeführt, dass sie nur vorübergehend während der erkannten Bergfahrten ausgeführt wird, wobei man unter Bergfahrt eine Bergabfahrt versteht. Bei entsprechender Beendigung der Bergfahrt wird diese Unterdrückung wieder beendet, so dass das automatische Bremssystem wieder aktiv arbeiten kann.

Im Rahmen der vorliegenden Erfindung wird auch eine Vorrichtung in Form eines Fahrzeug-Sicherheitssystems in einem Fahrzeug zur Unterdrückung unnötiger Bremseingriffe eines automatischen Bremssystems bereitgestellt. Das automatische Bremssystem, kann dabei einerseits mögliche Kollisionen mit anderen Verkehrsteilnehmern oder Hindernisse erkennen und andererseits automatisch die Bremsanlage des Fahrzeugs betätigen. Die erfindungsgemäße Vorrichtung ist einerseits eingerichtet, Bergfahrten zu erkennen und andererseits im Falle solcher erkannten Bergfahrten die Bremseingriffe des automatischen Bremssystems zu unterdrücken. Unter Bergfahrten werden dabei Bergabfahrten verstanden. Auf diese Weise verhindert die erfindungsgemäße Vorrichtung unnötige Bremseingriffe zur Warnung des Fahrers oder um das Fahrzeug abzubremsen, die auf fälschlich erkannte Hindernisse bei Bergfahrten zurückzuführen sind.

Hierzu verfügt das erfindungsgemäße Fahrzeug-Sicherheitssystem über eine Analyseeinheit, welche so ausgestaltet ist, dass sie Signale einer oder mehrerer Anlagen des Fahrzeugs auswerten kann und über die Auswertung Bergfahrten erkennen kann.

Eine solche Anlage kann beispielsweise eine spezielle Steuereinheit für den Offroad-Modus des Fahrzeugs sein. In diesem Fall wird von dieser Steuereinheit bei Aktivierung des Offroad-Modus ein entsprechendes Signal an das Fahrzeug-Sicherheitssystem geleitet, so dass während der Offroad-Modus aktiv ist, automatische Bremseingriffe des automatischen Bremssystems unterdrückt werden können.

Weiterhin kann eine solche Anlage auch ein Bergabfahr-Assistenz-System wie z.B. Hill Descent Control, HDC, sein. Solche Bergabfahr-Assistenz-Systeme sind in manchen Fahrzeugen verbaut um die Steuerung des Fahrzeugs bei schwierigen Bergabfahrten gezielt zu unterstützen und zu erleichtern. Solche Bergabfahr-Assistenz-Systeme halten bei steilen Bergabfahrten automatisch die gewünschte Geschwindigkeit und entlasten somit den Fahrer von der schwierigen Bremskontrolle und stellen eine stabile Fahrzeuglage auf schwierigem Untergrund sicher. Über die Aktivierung eines solchen Bergabfahr-Assistenz-Systems kann dabei ebenso ein entsprechendes Signal an das erfindungsgemäße Fahrzeug-Sicherheitssystem geleitet werden, um automatische Bremseingriffe des automatischen Bremssystems bei Bergabfahrten zu unterdrücken.

Auch im Fahrzeug verbaute Sensoren zur Erfassung der Fahrzeuglage oder zur Erfassung von Beschleunigungen können die entsprechenden Signale liefern, so dass das Fahrzeug-Sicherheitssystem Bergfahrten daraus erkennen kann und eine Unterdrückung der automatischen Bremseingriffe veranlassen kann. Beispielsweise kann über einen Neigungssensor im Fahrzeug die Lage der Fahrzeuglängsachse gegenüber der Horizontalen gemessen und so die momentane Steigung bzw. das Gefälle des Untergrundes bestimmt werden.

Außerdem kann über entsprechende Sensoren im Fahrzeug auch die Bodenbeschaffenheit des Untergrundes bestimmt werden. Beispielsweise können Signale von Sensoren der Fahrzeugdämpfer vom Fahrzeug-Sicherheitssystem ausgewertet werden, so dass auch hier unebenes Gelände bzw. Bergfahrten erkannt werden und eine Unterdrückung automatischer Bremseingriffe des automatischen Bremssystems veranlasst werden kann.

Dabei kann auch eine Fahrt des Fahrzeugs auf sehr unebenem Gelände als Bergfahrt betrachtet werden.

Weiterhin verfügt das erfindungsgemäße Fahrzeug-Sicherheitssystem über eine Ausgabeeinheit, welche ausgestaltet ist Bremseingriffe des automatischen Bremssystems während der Bergfahrten zu unterdrücken. Hierzu steht diese Ausgabeeinheit des Fahrzeug-Sicherheitssystems in direkter Kommunikation mit dem automatischen Bremssystem, so dass es im Falle von erkannten Bergfahrten das automatische Bremssystem vorübergehend deaktivieren kann. Insbesondere kann das automatische Bremssystem auch Bestandteil der erfindungsgemäßen Vorrichtung sein.

Das automatische Bremssystem dient insbesondere dazu, mögliche Kollisionen zu erkennen und weitgehend zu vermeiden. Dabei kann der Fahrer des Fahrzeugs zunächst über einen kurzen Bremsruck, der über eine Aktivierung der Bremsanlage des Fahrzeugs durch das automatische Bremssystem erfolgt, gewarnt werden. In einer weiteren Eskalationsstufe kann vom automatischen Bremssystem eine Verzögerung des Fahrzeugs ebenfalls durch eine Aktivierung der Bremsanlage des Fahrzeugs ausgelöst werden. Da es in sehr unebenem Gelände oder bei Bergabfahrten leicht zu fälschlichen Erkennungen von Hindernissen und damit zu unnötigen Bremseingriffen durch das automatische Bremssystem kommen kann, dient die erfindungsgemäße Vorrichtung zur Unterdrückung von Bremseingriffen durch das automatische Bremssystem in entsprechendem Gelände

Im Rahmen der vorliegenden Erfindung wird auch ein Fahrzeug bereitgestellt, welches eine erfindungsgemäße Vorrichtung umfasst. Die Vorrichtung dient zur Unterdrückung unnötiger Bremseingriffe eines im Fahrzeug befindlichen automatischen Bremssystems bei Bergabfahrten.

Die vorliegende Erfindung bietet folgende Vorteile:
- Bei Bergfahrten werden mögliche Fehlauslösungen eines automatisierten Kollisionswarn- und Notbremssystems weitgehend vermieden, so dass der Fahrer durch derartige Warnungen oder Bremseingriffe nicht erschreckt oder gestört wird.
- Insbesondere bei Bergabfahrten in rutschigem Gelände kann die Unterdrückung von unnötigen Bremseingriffen ein Blockieren der Räder und damit ein Ausbrechen oder Schleudern des Fahrzeugs wirksam unterdrücken und damit die Fahrsicherheit erhöhen.
- Die Sensorik des automatisierten Kollisionswarn- und Notbremssystems zum Erkennen möglicher Hindernisse kann sehr sensibel und damit auch sehr wirksam eingestellt werden, da keine möglichen Fehlauslösungen dieses Systems bei starken Steigungen bzw. Gefälle hierfür befürchtet werden müssen. Daher hat ein entsprechendes automatisiertes Kollisionswarn- und Notbremssystem in Kombination mit der Erfindung in normaler Straßenumgebung eine hohe Wirksamkeit zur Erkennung und Unterdrückung gefährlicher Situationen.

Im Folgenden wird die vorliegende Erfindung anhand bevorzugter erfindungsgemäßer Ausführungsformen mit Bezug zu den Figuren beschrieben.

In Fig. 1 ist eine Fahrsituation eines Fahrzeugs bei einer Bergabfahrt dargestellt, bei der ein automatisches Bremssystem fälschlicherweise ein Hindernis erkennen kann.

In Fig. 2 ist ein Ablaufdiagramm des erfindungsgemäßen Verfahrens zur Unterdrückung unnötiger Bremseingriffe eines automatischen Bremssystems dargestellt.

In Fig. 3 sind schematisch die erfindungsgemäße Vorrichtung und einzelne Module in einem Fahrzeug gezeigt, durch deren Zusammenwirkung die unnötigen Bremseingriffe unterdrückt werden können.

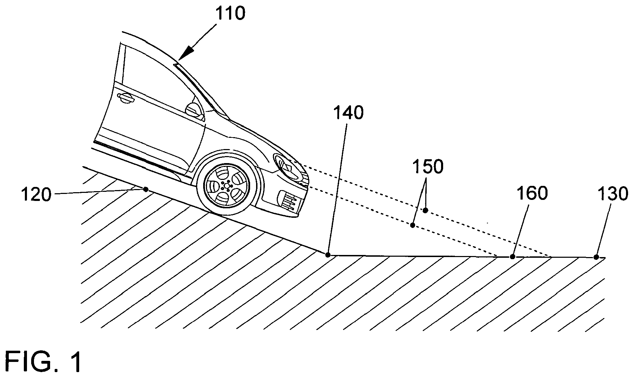

Fig.1 zeigt eine typische Situation, in der ein automatisches Bremssystem eines Fahrzeugs 110 in Form eines Kollisionswarnsystems fälschlicherweise ein Hindernis im Fahrbereich des Fahrzeugs 110 detektiert. Das Fahrzeug 110 befindet sich dabei auf einem Streckenabschnitt 120 mit starkem Gefälle, während die Umfeldsensoren den vor dem Fahrzeug 110 liegenden Streckenabschnitt 130 untersuchen. Dieser Streckenabschnitt 130 verläuft im dargestellten Beispiel horizontal, so dass sich zwischen den beiden Streckenabschnitten ein Knick 140 auf der Fahrbahn befindet. Die Umfeldsensoren versuchen dabei Hindernisse im Bereich der vom Fahrzeug 110 zu befahrenden Strecke zu erkennen und dabei insbesondere auch die Gefährlichkeit eines solchen Hindernisses abzuschätzen. Im dargestellten Fall erkennt das Kollisionswarnsystem durch seinen Detektionsbereich 150 fälschlicherweise, dass das vermeintliche Hindernis 160 eine ausreichende Höhe hat, um eine gefährliche Kollision zu verursachen. Dabei spielt insbesondere eine Rolle, ob das Kollisionswarnsystem auch darauf ausgelegt ist, stehende Objekte als mögliche Hindernisse zu erkennen. Nur in diesem Fall würde der entsprechende Abschnitt 130 der Fahrbahn auch tatsächlich fälschlicherweise als Hindernis erkannt werden. Andererseits reduziert ein Ausblenden der Erkennung stehender Objekte bei einem Kollisionswarnsystem stark seinen Nutzen.

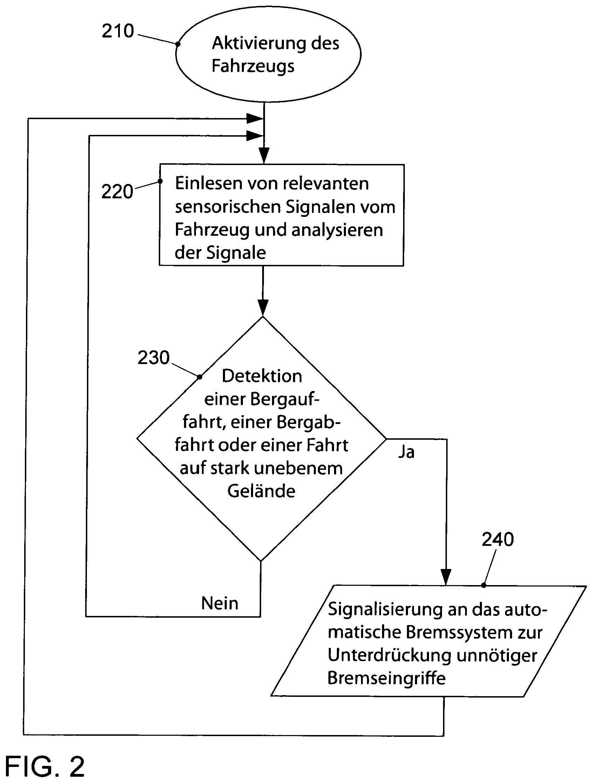

Fig. 2 stellt ein Ablaufdiagramm des erfindungsgemäßen Verfahrens zur Unterdrückung unnötiger Bremseingriffe eines automatischen Bremssystems dar. Der Ablauf beginnt mit der Aktivierung 210 des Fahrzeugs oder mit der Aktivierung der erfindungsgemäßen Vorrichtung beispielsweise beim Anlassen des Fahrzeugs. Entsprechend dem Verfahren werden im nächsten Ablaufschritt 220 laufend sensorische Signale vom Fahrzeug eingelesen und analysiert, um aus diesen Signalen auf eine Bergauffahrt, eine Bergabfahrt oder ein stark unebenes Gelände zu schließen. Bevorzugt sind diese sensorischen Signale elektrische Signale. Diese Signale können beispielsweise durch die Aktivierung eines Offroad-Modus von einer entsprechenden Steuereinheit erzeugt werden. Außerdem können die Signale auch von einem Bergabfahr-Assistenz-System, wie z.B. Hill Descent Control, HDC, stammen. Damit kann ein Signal der Aktivierung eines Bergabfahr-Assistenz-Systems entsprechend dem erfindungsgemäßen Verfahren als Kriterium zur Detektion einer Bergabfahrt herangezogen werden. Weiterhin können die sensorischen Signale auch von im Fahrzeug verbauten Sensoren zur Erfassung der Fahrzeuglage oder zur Erfassung von Beschleunigungen stammen. Beispielsweise kann über einen Neigungssensor im Fahrzeug die Lage der Fahrzeuglängsachse gegenüber der Horizontalen gemessen und so die momentane Steigung bzw. das Gefälle des Untergrundes bestimmt werden. Alternativ kann über die Signale von Beschleunigungssensoren auf die Beschaffenheit des vom Fahrzeug gerade befahrenen Geländes geschlossen werden. Die Bodenbeschaffenheit kann aber auch über Signale von Sensoren der Fahrzeugdämpfer vom Fahrzeug-Sicherheitssystem ausgewertet werden, so dass auch hier unebenes Gelände bzw. Bergauf- und/oder Bergabfahrten erkannt werden können. Im nächsten Schritt 230 erfolgt über die ausgewerteten sensorischen Signale eine Entscheidung gemäß dem erfindungsgemäßen Verfahren, ob eine entsprechende Fahrt, also eine Bergauffahrt, eine Bergabfahrt oder eine Fahrt auf stark unebenem Gelände vorliegt oder nicht. Falls eine Bergabfahrt vorliegt verzweigt der Ablauf zu Schritt 240 bei welchem dem automatischen Bremssystem des Fahrzeugs signalisiert wird, dass automatische Bremseingriffe des automatischen Bremssystems nicht auszuführen sind. Danach, oder im Fall das keine Bergfahrt oder Fahrt in unebenem Gelände detektiert wurde, kehrt der Programmablauf wieder zu Schritt 220 zurück.

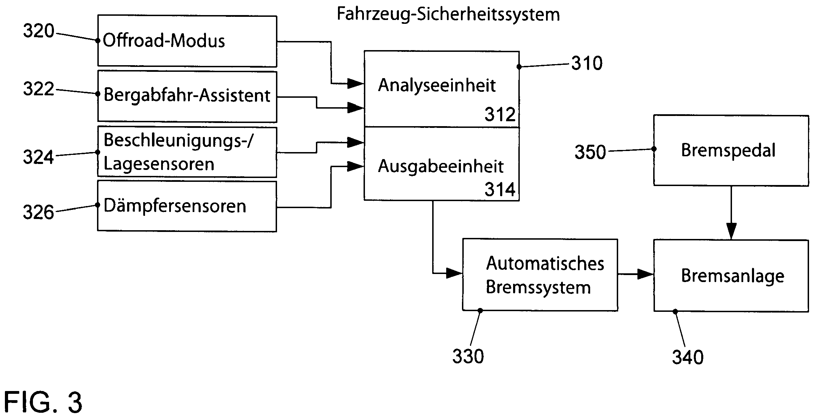

In Fig. 3 zeigt schematisch die erfindungsgemäße Vorrichtung 310 und einzelne Module in einem Fahrzeug, durch deren Zusammenwirkung die unnötiger Bremseingriffe unterdrückt werden können. Die Vorrichtung 310 ist ein Fahrzeug-Sicherheitssystem und kann gemäß einer bevorzugten Ausführungsform aus zwei Einheiten, einer Analyseeinheit 312 und einer Ausgabeeinheit 314 bestehen.

Die Analyseeinheit 312 empfängt dabei Signale von einer oder mehreren Anlagen des Fahrzeugs und analysiert sie. Eine solche Anlage des Fahrzeugs kann eine spezielle Steuereinheit 320 für den Offroad-Modus des Fahrzeugs sein. In diesem Fall wird von dieser Steuereinheit 320 bei Aktivierung des Offroad-Modus ein entsprechendes Signal an die Analyseeinheit geleitet. Weiterhin kann eine solche Anlage auch ein Bergabfahr-Assistenz-System 322 wie z.B. Hill Descent Control, HDC, sein. Solche Bergabfahr-Assistenz-Systeme 322 unterstützen den Fahrer speziell bei Bergabfahrten und stellen eine stabile Fahrzeuglage auf schwierigem Untergrund sicher. Über die Aktivierung eines solchen Bergabfahr-Assistenz-Systems 322 kann dabei ebenso ein entsprechendes Signal an die Analyseeinheit 312 geleitet werden. Eine Anlage 324 kann auch aus im Fahrzeug verbauten Sensoren zur Erfassung der Fahrzeuglage oder zur Erfassung von Beschleunigungen bestehen. Die Signale dieser Sensoren werden entsprechend an die Analyseeinheit 312 geleitet. Weiterhin können die Signale auch von einer Anlage 326 stammen, die über entsprechende Sensoren im Fahrzeug die Bodenbeschaffenheit des Untergrundes über die Fahrzeugdämpfer bestimmen.

Über das Analysieren der empfangenen Signale schließt die Analyseeinheit 312 der erfindungsgemäßen Vorrichtung 310, ob sich das Fahrzeug auf einer Bergfahrt befindet. Falls dies der Fall ist, wird von der Ausgabeeinheit 314 über entsprechende Steuersignale das automatische Bremssystem 330 des Fahrzeugs davon abgehalten, automatische Bremseingriffe an die Bremsanlage 340 des Fahrzeugs abzugeben. Bremsaktionen des Fahrers, die direkt über das Bremspedal 350 an die Bremsanlage 340 geleitet werden, werden von der erfindungsgemäßen Vorrichtung 310 nicht beeinflusst.

Das automatische Bremssystem 330 dient insbesondere dazu, mögliche Kollisionen zu erkennen und weitgehend zu vermeiden. Dabei kann der Fahrer des Fahrzeugs zunächst über einen kurzen Bremsruck, der über eine Aktivierung der Bremsanlage 340 des Fahrzeugs durch das automatische Bremssystem 330 erfolgt, gewarnt werden. Weiterhin kann ein automatischer Bremseingriff des automatischen Bremssystems 330 eine Konditionierung der Bremsanlage 340 sein, wobei die Konditionierung der Bremse ein Beseitigen von Leerwegen der Bremsanlage 340 oder ein Vorbefüllen der Bremsanlage 340 ist. In einer weiteren Eskalationsstufe kann vom automatischen Bremssystem 330 eine Verzögerung des Fahrzeugs ebenfalls durch eine Aktivierung der Bremsanlage 340 des Fahrzeugs ausgelöst werden.

## Patentansprüche

1. Verfahren für ein Fahrzeug-Sicherheitssystem (310) in einem Fahrzeug (110) mit einem automatischen Bremssystem (330) des Fahrzeugs (110), welches eingerichtet ist, drohende Kollisionen des Fahrzeugs (110) zu erkennen und eine Bremsanlage (340) des Fahrzeugs (110) zu aktivieren, wobei das Verfahren umfasst:
(i) Erkennen einer Bergfahrt über eine Auswertung von Signalen von einer Anlage (320, 322, 324, 326) des Fahrzeugs (110); und
(ii) Unterdrücken von Aktionen des automatischen Bremssystems (330) während der Bergfahrten,
wobei die Bergfahrt eine Bergabfahrt ist.

2. Verfahren nach Anspruch 1,
**dadurch gekennzeichnet,**
**dass** das Erkennen der Bergfahrt über die Auswertung von Signalen erfolgt, welche ein Fahrer durch ein Wählen eines Offroad-Modus des Fahrzeugs (110) auslöst.

3. Verfahren nach Anspruch 1,
**dadurch gekennzeichnet,**
**dass** das Erkennen der Bergfahrt über die Auswertung von Signalen erfolgt, welche durch eine Aktivierung eines Bergabfahr-Assistenz-Systems (322) ausgelöst werden.

4. Verfahren nach Anspruch 1,
**dadurch gekennzeichnet,**
**dass** das Erkennen der Bergfahrt über die Auswertung von Signalen einer Sensorik (324) erfolgt, welche eingerichtet ist, eine Neigung einer Längsachse des Fahrzeugs (110) gegenüber einer Horizontalen zu erfassen.

5. Verfahren nach Anspruch 1,
**dadurch gekennzeichnet,**
**dass** das Erkennen der Bergfahrt über die Auswertung von Signalen einer Sensorik (324) erfolgt, welche als im Fahrzeug (110) verbaute Beschleunigungs-Sensoren eingerichtet sind, eine Steigung und/oder ein Gefälle zu erfassen.

6. Verfahren nach Anspruch 1,
**dadurch gekennzeichnet,**
**dass** das Erkennen der Bergfahrt über die Auswertung von Signalen einer Sensorik (326) in mindestens einem Dämpfer des Fahrzeugs (110) erfolgt, wobei die Sensorik () eingerichtet ist, unebene Bodenbeschaffenheiten zu erfassen.

7. Verfahren nach einem der vorhergehenden Ansprüche,
**dadurch gekennzeichnet,**
**dass** die Aktion des automatischen Bremssystems (330) eine automatische Bremsung des Fahrzeugs (110) über die Bremsanlage (340) als Reaktion auf ein vom automatischen Bremssystem (330) erkanntes Hindernis umfasst.

8. Verfahren nach einem der Ansprüche 1 bis 7,
**dadurch gekennzeichnet,**
**dass** die Aktion des automatischen Bremssystems (330) eine Kollisionswarnung umfasst, die vom automatischen Bremssystem (330) durch einen kurzen Bremsruck über die Bremsanlage (340) kenntlich gemacht wird.

9. Verfahren nach einem der Ansprüche 1 bis 8,
**dadurch gekennzeichnet,**
**dass** die Aktion des automatischen Bremssystems (330) eine Konditionierung der Bremsanlage (340) ist, wobei die Konditionierung der Bremse ein Beseitigen von Leerwegen der Bremsanlage (340) oder ein Vorbefüllen der Bremsanlage (340) umfasst.

10. Fahrzeug-Sicherheitssystem (310) in einem Fahrzeug (110) mit einem automatischen Bremssystem (330) des Fahrzeugs (110), welches eingerichtet ist, drohende Kollisionen des Fahrzeugs (110) zu erkennen und eine Bremsanlage (340) des Fahrzeugs (110) zu aktivieren, wobei das Fahrzeug-Sicherheitssystem (310) umfasst:
eine Analyseeinheit (312), welche ausgestaltet ist, Signale einer Anlage (320, 322, 324, 326) des Fahrzeugs (110) auszuwerten und Bergfahrten über die Auswertung der Signale zu erkennen; und
eine Ausgabeeinheit (314), welche ausgestaltet ist, Aktionen des automatischen Bremssystems (330) während der Bergfahrten zu unterdrücken,
wobei die Bergfahrt eine Bergabfahrt ist.

11. Fahrzeug-Sicherheitssystem nach Anspruch 10,
**dadurch gekennzeichnet,**
**dass** das System zur Durchführung des Verfahrens nach einem der Ansprüche 1 bis 10 eingerichtet ist.

12. Fahrzeug (110) mit einem Fahrzeug-Sicherheitssystem nach einem der Ansprüche 10 oder 11.

## Claims

1. Method for a vehicle safety system (310) in a vehicle (110) having an automatic brake system (330) of the vehicle (110), which brake system (330) is configured to detect imminent collisions of the vehicle (110) and to activate a brake device (340) of the vehicle (110), wherein the method comprises:
(i) detecting travel on a slope by means of an evaluation of signals from a system (320, 322, 324, 326) of the vehicle (110); and
(ii) suppressing actions of the automatic brake system (330) during travel on a slope,
wherein the travel on a slope is downhill travel.

2. Method according to Claim 1,
**characterized**
**in that** the detection of the travel on a slope is carried out by means of the evaluation of signals which is triggered by a driver by selecting an off-road mode of the vehicle (110).

3. Method according to Claim 1,
**characterized**
**in that** the detection of the travel on a slope is carried out by means of the evaluation of signals which are triggered by activation of a downhill travel assistance system (322).

4. Method according to Claim 1,
**characterized**
**in that** the detection of the travel on a slope is carried out by means of the evaluation of signals of a sensor system (324) which is configured to detect an inclination of a longitudinal axis of the vehicle (110) with respect to a horizontal.

5. Method according to Claim 1,
**characterized**
**in that** the detection of the travel on a slope is carried out by means of the evaluation of signals of a sensor system (324) which are configured as acceleration sensors installed in the vehicle (110) to detect a positive gradient and/or a negative gradient.

6. Method according to Claim 1,
**characterized**
**in that** the detection of the travel on a slope is carried out by means of the evaluation of signals of a sensor system (326) in at least one damper of the vehicle (110), wherein the sensor system () is configured to detect uneven conditions of the ground.

7. Method according to one of the preceding claims,
**characterized**
**in that** the action of the automatic brake system (330) comprises automatic braking of the vehicle (110) by means of the brake device (340) in reaction to an obstacle which is detected by the automatic brake system (330).

8. Method according to one of Claims 1 to 7,
**characterized**
**in that** the action of the automatic brake system (330) comprises a collision warning which is indicated by the automatic brake system (330) by a brief braking jolt by means of the brake device (340).

9. Method according to one of Claims 1 to 8,
**characterized**
**in that** the action of the automatic brake system (330) is a conditioning of the brake device (340), wherein the conditioning of the brake comprises eliminating idle travel of the brake device (340) or prefilling of the brake device (340).

10. Vehicle safety system (310) in a vehicle (110) having an automatic brake system (330) of the vehicle (110), which brake system (330) is configured to detect imminent collisions of the vehicle (110) and to activate a brake device (340) of the vehicle (110), wherein the vehicle safety system (310) comprises:
an analysis unit (312) which is configured to evaluate signals of a system (320, 322, 324, 326) of the vehicle (110) and to detect travel on a slope by means of the evaluation of the signals; and
an output unit (314) which is configured to suppress actions of the automatic brake system (330) during travel on a slope,
wherein the travel on a slope is downhill travel.

11. Vehicle safety system according to Claim 10,
**characterized**
**in that** the system is configured to carry out the method according to one of Claims 1 to 10.

12. Vehicle (110) having a vehicle safety system according to one of Claims 10 or 11.

## Revendications

1. Procédé pour un système (310) de sécurité pour véhicule utilisé dans un véhicule (110) doté d'un système automatique de freinage (330) du véhicule (110) et conçu pour détecter les risques de collision du véhicule (110) et activer l'installation de freinage (340) du véhicule (110), le procédé comportant les étapes suivantes :
(i) détection d'un roulage en pente par évaluation de signaux d'une installation (320, 322, 324, 326) du véhicule (110) et
(ii) interruption des actions du système automatique de freinage (330) pendant le déplacement en pente,
le déplacement en pente étant un déplacement de descente de la pente.

2. Procédé selon la revendication 1, **caractérisé en ce que** la détection du déplacement en pente s'effectue par l'évaluation de signaux que le conducteur déclenche par sélection d'un mode tout-terrain du véhicule (110).

3. Procédé selon la revendication 1, **caractérisé en ce que** la détection du déplacement en pente s'effectue par l'évaluation de signaux qui sont déclenchés par une activation du système d'assistance (322) à la descente de pente.

4. Procédé selon la revendication 1, **caractérisé en ce que** la détection du déplacement en pente s'effectue par l'évaluation de signaux d'un ensemble (324) de capteurs conçu pour saisir l'inclinaison de l'axe longitudinal du véhicule (110) par rapport à l'horizontale.

5. Procédé selon la revendication 1, **caractérisé en ce que** la détection du déplacement en pente s'effectue par l'évaluation de signaux d'un ensemble (324) de capteurs conçus comme capteurs d'accélération incorporés dans le véhicule (110) pour détecter une montée et/ou une descente.

6. Procédé selon la revendication 1, **caractérisé en ce que** la détection du déplacement en pente s'effectue par l'évaluation de signaux (326) prévu dans au moins un amortisseur du véhicule (110), l'ensemble de capteurs () étant conçu pour saisir la nature irrégulière du sol.

7. Procédé selon l'une des revendications précédentes, **caractérisé en ce que** l'action du système automatique de freinage (330) comporte le freinage automatique du véhicule (110) par l'installation de freinage (340) en réaction à la détection d'un obstacle par le système automatique de freinage (330).

8. Procédé selon l'une des revendications 1 à 7, **caractérisé en ce que** l'action du système automatique de freinage (330) comporte une alarme de collision qui est rendue détectable par le système automatique de freinage (330) grâce à une brève poussée sur les freins de l'installation de freinage (340).

9. Procédé selon l'une des revendications 1 à 8, **caractérisé en ce que** l'action du système automatique de freinage (330) comporte un conditionnement de l'installation de freinage (340), le conditionnement des freins comportant l'élimination de la course à vide de l'installation de freinage (340) ou un pré-remplissage de l'installation de freinage (340).

10. Système (310) de sécurité pour véhicule utilisé dans un véhicule (110) doté d'un système automatique de freinage (330) du véhicule (110) et conçu pour détecter les risques de collision du véhicule (110) et activer l'installation de freinage (340) du véhicule (110), le système (310) de sécurité pour véhicule comprenant :
une unité d'analyse (312) configurée pour évaluer des signaux d'une installation (320, 322, 324, 326) du véhicule (110) et de détecter des déplacements en pente par évaluation des signaux et
une unité de sortie (314) configurée pour interrompre les actions du système automatique de freinage (330) pendant des déplacements en pente,
le déplacement en pente étant un déplacement en pente descendante.

11. Système de sécurité pour véhicule selon la revendication 10, **caractérisé en ce que** le système est conçu pour mettre en oeuvre le procédé selon l'une des revendications 1 à 10.

12. Véhicule (110) doté d'un système de sécurité pour véhicule selon l'une des revendications 10 ou 11.
